# EUROPEAN PATENT SPECIFICATION

(11) **EP 0 665 923 B1**
(45) Date of publication and mention of the grant of the patent: **22.04.1998**
(21) Application number: 93919468.4
(22) Date of filing: 23.08.1993
(51) Int. Cl.: F02M 25/07

(54) **EXHAUST GAS RECIRCULATION SYSTEM**
ABGASRÜCKFÜHRUNGSSYSTEM
SYSTEME DE RECUPERATION DES GAZ D'ECHAPPEMENT

(43) Date of publication of application: 09.08.1995
(73) Proprietor: Hurley, Derek Melvin, Llandyssul Dyfed SA44 5PS (GB)
(72) Inventor: Hurley, Derek Melvin, Llandyssul Dyfed SA44 5PS (GB)
(74) Representative: Austin, Hedley William
(86) International application number: GB9301793
(87) International publication number: WO9506202

(56) References cited:
- EP-A- 0 234 370
- DE-A- 3 919 533
- FR-A- 2 226 567
- FR-A- 2 449 794
- NL-A- 7 400 185
- US-A- 2 584 674
- US-A- 3 733 827
- US-A- 4 055 158
- US-A- 4 087 966
- US-A- 4 314 446
- US-A- 4 356 806
- PATENT ABSTRACTS OF JAPAN vol. 7, no. 199 (M-240)3 September 1983 & JP,A,58 098 651 (NIPPON TOKUSHU) 11 June 1983
- PATENT ABSTRACTS OF JAPAN vol. 11, no. 282 (M-446)11 September 1987 & JP,A,62 083 015 (HONDA) 16 April 1987

## Description

The present invention is concerned with an exhaust gas recirculating system.

Recirculating systems which divert a part of the exhaust gas from the exhaust system back to a combustion chamber of an internal combustion engine are well known. These systems generally have a beneficial effect on the combustion process in the engine, ensuring that there are less carbon monoxide, nitrogen oxides (NOₓ) and other noxious gases in the exhaust. Such recirculating system frequently employ a condensing unit through which the exhaust gas passes before it passes through a filter. A problem associated with this arrangement however, is condensing of volatiles from the exhaust gas, which can result in clogging of the filtration medium employed in the recirculation system.

Arrangements which prevent condensation of volatiles from the exhaust gas are known.

For example, JP-A-58-98651 discloses an exhaust recirculation system comprising means for communicating at least some of the exhaust gas from an exhaust system to a combustion chamber of an internal combustion engine, which communicating means includes a heater and a filter downstream of the heater.

An exhaust system as disclosed in JP-A-58-98651 can be described as
a tail pipe;
transfer means suitable for communicating exhaust gas produced in a combustion chamber of an internal combustion engine to said tail pipe; and
an exhaust gas recirculation system which comprises a conduit for conveying at least some of the exhaust gas to said combustion chamber, said conduit including in the order specified:
at least one vaporising chamber for vaporising volatiles in said exhaust gas, said chamber comprising heating means ; and
filter means for filtering said exhaust gas.

A disadvantage of the system disclosed in JP-A-58-98651 is that electrical supply and control circuitry is required for the heater. The present invention solves this problem by using heating means which is directly heated by the exhaust gas.

According to the invention, a heating means is provided which comprises a first portion of heating element arranged to be heated by exhaust gases in the exhaust manifold, and a second portion of heating element arranged in the vaporising chamber to convey heat from the first portion to the vaporising chamber so as to heat the exhaust gas to a temperature at which condensation of volatiles therefrom is substantially precluded during passage of the exhaust gas through the filter, the vaporising chamber being sealed from the exhaust manifold in the region of the second portion of heating element.

The system according to the invention need have no moving parts, and can be readily fitted as original equipment by the manufacturer, or as a retro-fit to a previously manufactured vehicle or other apparatus having an internal combustion engine.

The conduit for conveying at least some of the exhaust gas to the combustion chamber is preferably of heat-resistant non-ferrous material, such as copper or the like.

The conduit can be arranged to communicate exhaust gas from an exhaust tail pipe or from part of the exhaust system, such as the exhaust manifold or a downpipe, to the combustion chamber.

In a preferred embodiment of the invention, the conduit includes, intermediate between the exhaust manifold and the heating means, a second filter. The second filter may be a coarse filter, suitable for, for example, filtering out solids before the recirculated exhaust gas reaches the heating means.

The heating element present in the heating means typically becomes red hot in the exhaust gas, so as to cause any condensable volatiles (such as unburnt hydrocarbons and water) to remain in the vapour phase (the water therefore being injected into the engine in the form of steam). By this means, clogging of the above-mentioned filter means by condensate from the exhaust gas is obviated.

The heating means comprises a first portion of heating element arranged in the exhaust manifold (in contact with the hottest portion of the gases from the engine), and a second portion of the heating element arranged in the vaporising chamber. The vaporising chamber is sealed from the exhaust manifold in the region of the second portion of the heating element, preferably by means of a peripheral seal which surrounds the heating element. The heating element is typically of ceramic material, and may be an elongate member encased in a perforated heat-resistant tube, preferably of non-ferrous metallic material (for example, of copper or the like).

The vaporising chamber preferably includes an inlet for exhaust gas and an outlet for heated exhaust gas longitudinally spaced from the inlet. This arrangement is beneficial in optimising heating of exhaust gas present in the vaporising chamber prior to exit of the gas from the outlet.

The filter advantageously comprises a thermally resistant medium, such as a suitable metallic filter element; a preferred such filter element is of stainless steel or the like, (which may be in the form of steel wool).

It is preferred that the filter further comprises a carbonaceous filter medium, such as charcoal, active carbon or the like. In a preferred embodiment of the invention, the carbonaceous medium is arranged as a sleeve around the metallic filter element, such that the recirculated gas first passes through the metallic filter element and then through the carbonaceous filter medium.

The present invention will now be further illustrated, with reference to the accompanying drawings, in which like parts are denoted by like numerals, and wherein:
Figure 1 illustrates collection of exhaust gas emitted from a tail pipe of a system according to the invention;
Figure 2 illustrates collection of exhaust gas from an exhaust pipe of a system according to the present invention;
Figure 3 illustrates a vaporising chamber used in a system according to the present invention; and
Figure 4 illustrates a filter used in a system according to the present invention.

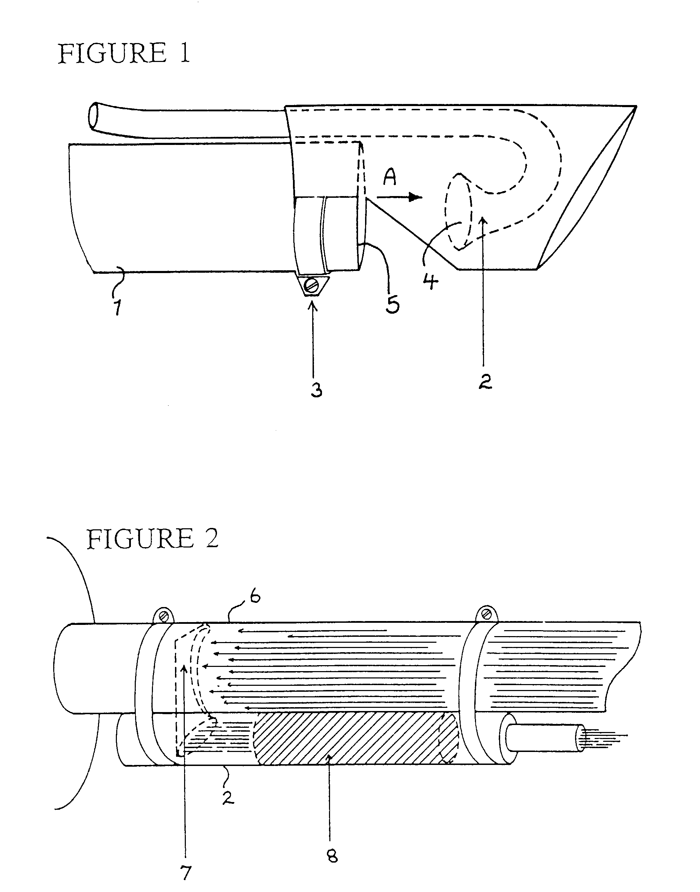

Referring to Figure 1, there is shown a tail pipe 1 and a collector pipe 2. Exhaust gas emitted from tail pipe 1 in the direction of arrow A is collected by pipe 2 and is recirculated to the combustion chamber (not shown) of an internal combustion engine. Collector pipe 2 is mounted on tail pipe 1 via clamp 3, the relative longitudinal positioning of pipes 1, 2 being adjustable so that the spacing of a mouth 4 from an open end 5 of tail pipe 1 can be selected.

Referring to Figure 2, an alternative embodiment is illustrated wherein a collector pipe 2 is mounted on a downpipe 6. A baffle 7 is arranged internally of downpipe 6 so as to divert a portion of exhaust gas into collector pipe 2. Pipe 2 includes a filter 8 which filters the exhaust gas prior to heating thereof.

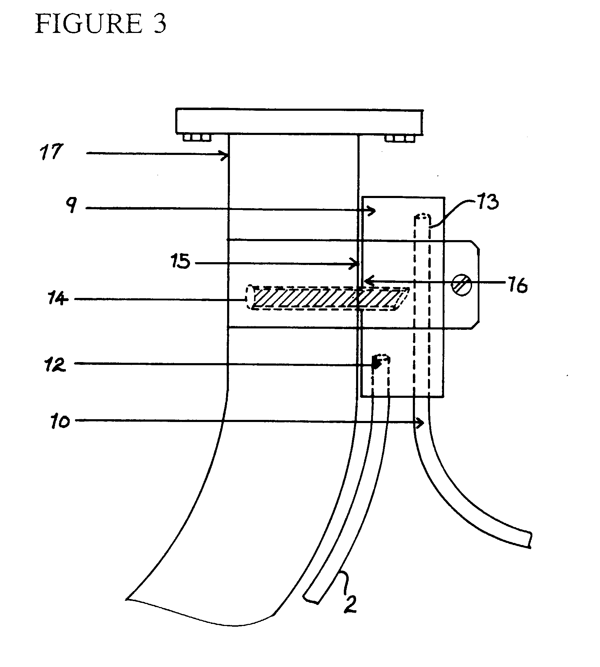

Collector pipe 2 then conveys exhaust gas to a vaporising chamber 9 as illustrated in Figure 3, an outlet tube 10 being arranged to communicate exhaust gas from chamber 9 to a filter 11.

The delivery portion 12, and collecting portion 13, of pipes 2, 10 respectively, are remotely arranged within chamber 9 to allow thorough heating of the exhaust gas prior to removal from chamber 9.

A heater 14 is arranged to communicate heat from an exhaust manifold 17 to chamber 9. Heater 14 extends through juxtaposed walls 15, 16 of manifold 17 and chamber 9. Walls 15, 16 in the region of heater 14 are sealed, so as to preclude gas communication between manifold 17 and chamber 9.

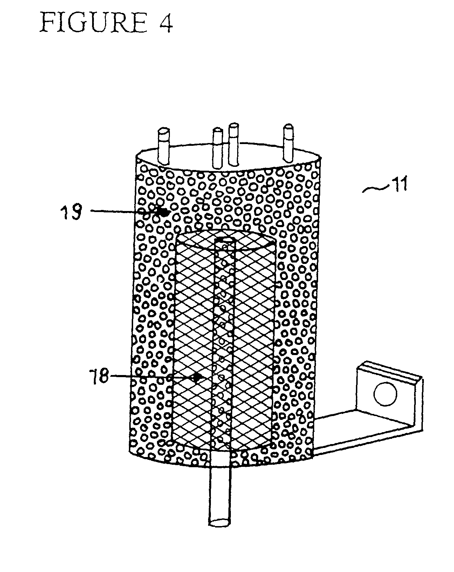

Referring to Figure 4, the heated gas exiting from chamber 9 is then passed through filter 11. Filter 11 comprises an inner stainless steel filter 18 and an outer sleeve of charcoal material 19. Although not illustrated, the filtered exhaust gas is then returned to a combustion chamber of an internal combustion engine.

## Claims

1. An exhaust system for an internal combustion engine, which system comprises:
(a) a tail pipe (1);
(b) transfer means suitable for communicating exhaust gas produced in a combustion chamber of an internal combustion engine to said tail pipe; and
(c) an exhaust gas recirculation system which comprises at least one conduit for conveying at least some of the exhaust gas from either said tail pipe or from said transfer means to said combustion chamber, said conduit being mounted either to the tail pipe or to the transfer means and including, in the order specified:
( i) at least one vaporising chamber (9) for vaporising volatiles in said exhaust gas, said chamber comprising heating means (14) to be heated by gases in the exhaust manifold; and
(ii) filter means (11) for filtering said exhaust gas; said heating means comprising a first portion of heating element arranged to be heated by exhaust gases in the exhaust manifold, and a second portion of heating element arranged in the vaporising chamber to convey heat from said first portion to said vaporising chamber so as to heat said exhaust gas to a temperature at which condensation of volatiles therefrom is substantially precluded during passage of said exhaust gas through said filter means, said vaporising chamber being sealed from said exhaust manifold in the region of said second portion of heating element.

2. A system according to claim 1, wherein said conduit includes, intermediate between said exhaust manifold and said heating means, second filter means (8).

3. A system according to claim 1 or 2, wherein said vaporising chamber includes an exhaust gas inlet (12) and an exhaust gas outlet (13) longitudinally spaced from said inlet.

4. A system according to claim 3, wherein said inlet and said outlet are adjacent respective spaced ends of said vaporising chamber.

5. A system according to any of claims 1 to 4, wherein said filter means (11) comprises a stainless steel filter element (18).

6. A system according to any of claims 1 to 5, wherein said filter means (11) comprises a carbonaceous filter medium (19).

7. A system according to claim 6, wherein said carbonaceous medium is arranged as a sleeve around the metallic filter element, such that the recirculated gas first passes through the metallic filter element and then through the carbonaceous filter medium.

8. An internal combustion engine comprising:
(a) at least one combustion chamber;
(b) intake means for communicating a combustible fluid medium to said combustion chamber;
(c) ignition means for igniting said combustible mixture; and
(d) an exhaust system according to any of claims 1 to 7.

## Patentansprüche

1. Auspuffsystem für eine Brennkraftmaschine umfassend:
(a) ein Abgasrohr (1);
(b) eine Übertragungseinrichtung, die in der Lage ist, in einer Brennkammer einer Brennkraftmaschine erzeugtes Abgas zum Abgasrohr zu leiten, und
(c) ein Abgasrückführungssystem, das wenigstens eine Leitung aufweist; um wenigstens einen Teil des Abgases entweder vom Abgasrohr oder von der Übertragungseinrichtung zur Brennkammer zu leiten, wobei die Leitung entweder am Abgasrohr oder an der Übertragungseinrichtung montiert ist und in der angegebenen Reihenfolge aufweist:
(i) wenigstens eine Verdampfungskammer (9) zum Verdampfen flüchtiger Bestandteile des Abgases, wobei die Kammer eine von den Abgasen im Auspuffrohr beheizte Heizvorrichtung (14) umfaßt; und
(ii) einen Filter (11) zum Filtern des Abgases;
wobei die Heizvorrichtung einen ersten Abschnitt eines Heizelements, das von den Abgasen in dem Auspuffrohr erhitzt wird, und einen zweiten Abschnitt des Heizelements umfaßt, der in der Verdampfungskammer angeordnet ist, um Wärme von dem ersten Bereich zur Verdampfungskammer zu leiten, so daß das Abgas auf eine Temperatur erhitzt wird, bei der eine Kondensation dessen flüchtiger Bestandteile während des Durchgangs des Abgases durch den Filter im wesentlichen ausgeschlossen ist, wobei die Verdampfungskammer im Bereich des zweiten Abschnitts des Heizelements vom Abgasrohr abgedichtet ist.

2. System nach Anspruch 1,
**dadurch gekennzeichnet, daß**
die Leitung einen zweiten Filter (8) zwischen dem Abgasrohr und der Heizvorrichtung umfaßt.

3. System nach Anspruch 1 oder 2,
**dadurch gekennzeichnet, daß**
die Verdampfungskammer einen Abgaseinlaß (12) und einen vom Einlaß in Längsrichtung beabstandeten Abgasauslaß (13) umfaßt.

4. System nach Anspruch 3,
**dadurch gekennzeichnet, daß**
der Einlaß und der Auslaß nahe den beabstandeten Enden der Verdampfungskammer angeordnet sind.

5. System nach einem der Ansprüche 1 bis 4,
**dadurch gekennzeichnet, daß**
der Filter (11) ein rosffreies Stahlfilterelement (18) umfaßt.

6. System nach einem der Ansprüche 1 bis 5,
**dadurch gekennzeichnet, daß**
der Filter (11) ein Kohlenstoff-Filtermedium (19) umfaßt.

7. System nach Anspruch 6,
**dadurch gekennzeichnet, daß**
das Kohlenstoffmedium als eine Hülse um das metallische Filterelement angeordnet ist, so daß das rückgeführte Gas zunächst durch das metallische Filterelement und dann durch das Kohlestoff-Filtermedium strömt.

8. Brennkraftmaschine umfassend:
(a) wenigstens eine Brennkammer;
(b) eine Zufuhreinrichtung, um ein Brennstoff-Fluid zu der Brennkammer zu leiten; (c) eine Zündvorrichtung zum Zünden der Brennstoffmischung; und
(d) ein Auspuffsystem gemäß einem der Ansprüche 1 bis 7.

## Revendications

1. Système d'échappement pour moteur à combustion interne, ce système comprenant :
(a) un tuyau d'échappement (1),
(b) des moyens de transfert servant à envoyer au tuyau d'échappement les gaz d'échappement produits dans une chambre de combustion du moteur à combustion interne et
(c) un système de recyclage de gaz d'échappement qui comprend au moins un conduit servant à transférer au moins une partie des gaz d'échappement soit depuis le tuyau d'échappement, soit depuis les moyens de transfert jusqu'à la chambre de combustion, le conduit étant monté soit sur le tuyau d'échappement, soit sur les moyens de transfert et comprenant, dans l'ordre indiqué :
(i) au moins une chambre de vaporisation (9) servant à vaporiser les substances volatiles contenues dans les gaz d'échappement, la chambre comprenant des moyens chauffants (14) devant être chauffés par les gaz contenus dans le collecteur d'échappement, et
(ii) des moyens de filtration (11) servant à filtrer les gaz d'échappement, les moyens chauffants comprenant une première partie d'élément chauffant, disposée de façon à être chauffée par les gaz d'échappement contenus dans le collecteur d'échappement et une seconde partie d'élément chauffant disposée dans la chambre de vaporisation de façon à transférer de la chaleur depuis la première partie jusqu'à la chambre de vaporisation, de manière à chauffer les gaz d'échappement à une température à laquelle une condensation des substances volatiles à partir de ceux-ci est pratiquement exclue pendant le passage des gaz d'échappement dans les moyens de filtration, la chambre de vaporisation étant rendue étanche par rapport au collecteur d'échappement dans la zone de la seconde partie d'élément chauffant.

2. Système suivant la revendication 1, dans lequel le conduit comprend, en position intermédiaire entre le collecteur d'échappement et les moyens chauffants, des seconds moyens de filtration (8).

3. Système suivant la revendication 1 ou 2, dans lequel la chambre de vaporisation comporte une entrée de gaz d'échappement (12) et une sortie de gaz d'échappement (13) espacée longitudinalement de l'entrée.

4. Système suivant la revendication 3, dans lequel l'entrée et la sortie sont adjacentes à des extrémités espacées respectives de la chambre de vaporisation.

5. Système suivant l'une quelconque des revendications 1 à 4, dans lequel les moyens de filtration (11) comprennent un élément de filtre (18) en acier inoxydable.

6. Système suivant l'une quelconque des revendications 1 à 5, dans lequel les moyens de filtration (11) comprennent un agent de filtration (19) de type carboné.

7. Système suivant la revendication 6, dans lequel l'agent de type carboné est agencé sous forme d'un manchon autour de l'élément métallique de filtration, de façon telle que les gaz recyclés traversent d'abord l'élément métallique de filtration, puis l'agent de filtration de type carboné.

8. Moteur à combustion interne comprenant :
(a) au moins une chambre de combustion,
(b) des moyens d'admission servant à envoyer une matière fluide combustible à la chambre de combustion,
(c) des moyens d'allumage servant à allumer le mélange combustible et
(d) un système d'échappement suivant l'une quelconque des revendications 1 à 7.
